## Europäisches Patentamt

## European Patent Office

## Office européen des brevets

(11) Veröffentlichungsnummer: **0 124 734**

**B1**

(12) **EUROPÄISCHE PATENTSCHRIFT**

(45) Veröffentlichungstag der Patentschrift:
04.01.89

(21) Anmeldenummer: **84103186.7**

(22) Anmeldetag: **22.03.84**

(51) Int. Cl.⁴: **H 02 M 3/335**

Ⓕ

(54) Sperrwandler-Schaltnetzteil.

(30) Priorität: **05.04.83 DE 3312209**

(43) Veröffentlichungstag der Anmeldung:
**14.11.84 Patentblatt 84/46**

(45) Bekanntmachung des Hinweises auf die Patenterteilung:
**04.01.89 Patentblatt 89/1**

(84) Benannte Vertragsstaaten:
**AT CH DE FR GB IT LI SE**

(56) Entgegenhaltungen:
**EP-A-0 046 515**
**WO-A-81/01224**
**DE-A-2 934 159**

**PATENT ABSTRACTS OF JAPAN, Band 7, Nr. 26 (P-172) 1171 , 2. Februar 1983; & JP - A - 57 178 514 (TOKYO DENKI KAGAKU KOGYO K.K.) 02.11.1982**

(73) Patentinhaber: **Siemens Aktiengesellschaft Berlin und München, Wittelsbacherplatz 2, D-8000 München 2 (DE)**

(72) Erfinder: **Peruth, Günther, Dipl.- Ing., Franz-Wolter- Strasse 13, D-8000 München 81 (DE)**
Erfinder: **Lenz, Michael, Ing.grad., Fischbachauer Strasse 3, -8000 München 90 (DE)**

**Beschreibung**

Die Erfindung betrifft einen Sperrwandler-Schaltnetzteil zur Versorgung eines elektrischen Geräts gemäß Oberbegriff des Anspruches 1.

Ein solcher Sperrwandler-Schaltnetzteil ist beispielsweise in der DE-A-3 032 034 (= EP-A-0 046 515) beschrieben. Als weiterer Stand der Technik kann "Funkschau" (1975), Heft 5, S. 40-43 und das Buch von Wüstehube u. a. mit dem Titel "Schaltnetzteile" (erschienen 1979 im expert-Verlag, VDE-Verlag (vgl. insbes. S. 182 ff) sowie Siemens "Schaltnetzteile mit der IS TDA 4600" S. 7 ff hingewiesen werden.

Bekanntlich hat ein solcher Schaltnetzteil die Aufgabe, ein elektrisches Gerät, z. B. einen Fernsehempfänger, mit stabilisierten und geregelten Betriebsspannungen zu versorgen. Der Kern eines solchen Schaltnetzteils ist deshalb durch eine Regelschaltung gegeben, deren Stellglied durch den eingangs genannten und insbesondere durch einen bipolaren Leistungstransistor realisierten dreipoligen elektronischen Schalter gegeben ist. Weiter ist eine hohe Arbeitfrequenz und ein auf hohe Betriebsfrequenz ausgerichteter Transformator vorgesehen, da im allgemeinen eine weitgehende Absonderung des zu versorgenden elektrischen Geräts vom Versorgungsnetz erwünscht ist. Solche Schaltnetzteile können entweder nach dem synchronisierten Betrieb oder nach dem selbstschwingenden Betrieb ausgelegt sein. Letzteres gilt für einen Schaltnetzteil, mit dem sich die vorliegende Erfindung befaßt. Ein solcher Schaltnetzteil ist aber auch in der DE-A-3 032 034 beschrieben.

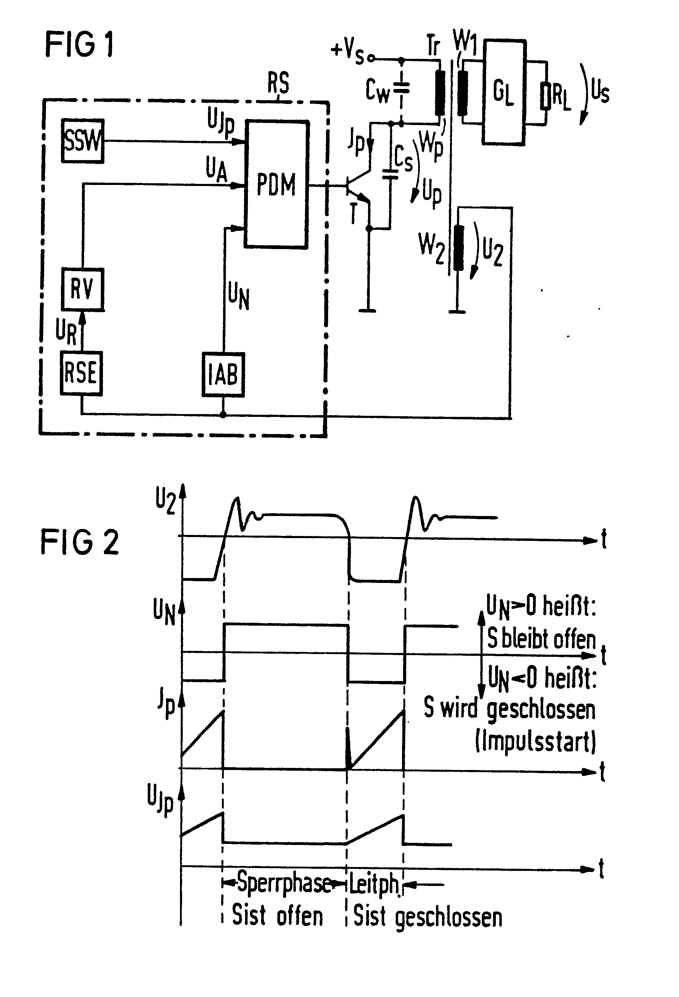

Das zu einem solchen Schaltnetzteil gehörende Prinzipschaltbild ist in Figur 1 dargestellt, auf die zunächst eingegangen werden soll.

Ein npn-Leistungstransistor dient z. B. als Stellglied T für die Regelschaltung und ist mit seiner Emitter-Kollektorstrecke in Serie mit der Primärwicklung eines Transformators Tr geschaltet. Andererseits könnte als Stellglied T auch ein anderes dreipoliges elektronisches Schaltelement, z. B. ein Thyristor oder ein Leistungs-MOS-Feldeffekttransistor verwendet werden. Unter Bezug auf die Figur 1 in der DE-A-3 032 034 kann dabei festgestellt werden, daß die diese Serienschaltung betreibende Gleichspannung durch Gleichrichtung der vom Wechselstromnetz gelieferten Wechselspannung mittels einer Gleichrichterschaltung, z. B. einer Grätzschaltung, erhalten wird. Im Falle der Verwendung eines npn-Transistors als Schalter T liegt dabei der Emitter dieses Transistors am Bezugspotential, der Kollektor an der Primärwicklung $W_p$ dieses Transformators Tr und das andere Ende dieser Primärwicklung an dem von der genannten (aber in der Zeichnung nicht dargestellten) Gleichrichterschaltung gelieferten Versorgungspotential $+V_s$. Die Emitter-Kollektorstrecke des Transistors T ist von einem Kondensator $C_s$ überbrückt, während die an der Primärwicklung $W_p$ liegende Kapazität $C_w$

parasitärer Natur ist. Der Leistungstransistor T ist an seiner Basis durch den Ausgangsteil der eingangs genannten Regelschaltung, d. h. durch den in dieser vorgesehenen Pulsdauer-Modulator PDM, gesteuert.

Eine Sekundärwicklung W2 des Transformators Tr dient als Sensor für die Regelschaltung und liegt daher mit dem einen Ende an dem besagten Bezugspotential und mit dem anderen Ende am Eingang der Regelschaltung RS. Eine weitere Sekundärwicklung W1 bildet die eigentliche Sekundärseite des Sperrwandler-Transformators Tr, die zur Beaufschlagung Gleichrichteranlage und letztere zur Beaufschlagung eines elektrischen Geräts $R_L$ vorgesehen ist. Die von der Gleichrichteranlage GL gelieferte Gleichspannung ist für die folgenden Ausführungen mit $U_s$ bezeichnet.

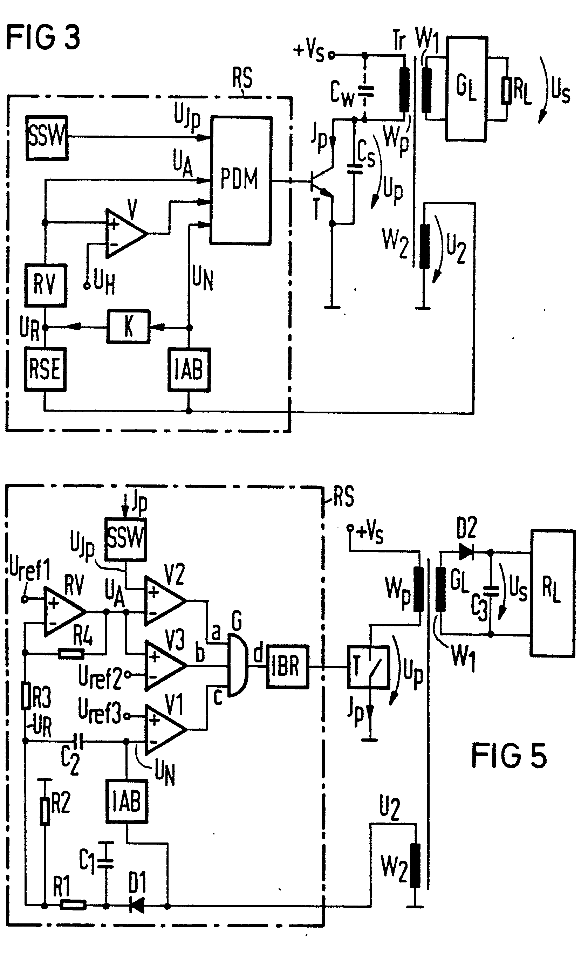

Wie bereits eingangs angedeutet, besteht die Regelschaltung RS aus dem den Transistor T steuernden und als Pulsdauer-Modulator ausgebildeten Ausgangschaltungsteil PDM und zwei durch die Sensorwicklung $W_2$ gesteuerten Eingangsteilen, wobei der eine Eingangsteil RSE der Regelspannungserzeugung dient und über einen Regelverstärker RV ein Steuersignal $U_A$ für den Ausgangsteil PDM abgibt. Der andere Eingangsteil LAB dient der Impulsaufbereitung und liefert ein Signal $U_N$ an den Ausgangsteil PDM der Regelschaltung RS. Schließlich ist noch ein Strom-Spannungswandler SSW vorgesehen, der die Istwertsteuerung der Regelschaltung bildet und eine dem Primärstrom $J_p$ proportionale Spannung $U_{Jp}$ an den Pulsdauer-Modulator PDM abgibt. Die zuletzt genannten Teile der Regelschaltung RS sind ebenfalls in der DE-OS-3 032 034 angegeben. Sie gehören zu der dort in Figur 3 dargestellten Regelschaltung. Die Regelspannungserzeugung ist durch die dort aus Fig. 1 und 2 ersichtlichen Widerstände R5 und R4 gegeben. Die Impulsaufbereitung IAB besteht aus der in Fig. 3 der DE-OS ersichtlichen Nulldurchgangsidentifikation und der durch sie beaufschlagten Steuerlogik. Der Pulsdauer-Modulator PDM ist schließlich durch die in der DE-OS-3 032 034 angedeutete Triggerschaltung mit dem durch sie beaufschlagten Teil der Steuerlogik gegeben.

Das zu einer Schaltung gemäß Figur 1 gehörende Zeitdiagramm, also das zeitliche Verhalten der in der Regelschaltung RS auftretenden Signale $U_2$ (= das von der Transformatorwicklung zur Steuerung der Regelschaltung RS abgegebene Signal), $U_N$ (= das von der Impulsaufbereitung IAB gelieferte Signal), $J_p$ (= der von der mit dem Schalttransistor T in Serie liegenden Transformatorwicklung $W_p$ gelieferte Strom) und $U_{Jp}$ (= das vom Strom-Spannungswandler SSW gelieferte Istwert-Signal), ist in Figur 2 dargestellt.

Ersichtlich liefert die von der sekundären Transformatorwicklung $W_2$ gelieferte Spannung $U_2$ mit dem Nulldurchgang ($U_2$ = 0 V) die Information, daß die im Transformator Tr gespeicherte Energie abgeflossen ist und ein neuer Ladezyklus beginnen, d. h. der durch den Transistor T gegebene Schalter geschlossen werden kann. Über die Impulsaufbereitungsstufe IAB wird diese Information dem Pulsdauer-Modulator PDM mitgeteilt. (Es gilt dabei: $U_N < 0$ V → Impulsstart, $U_N > 0$ V → kein Impulsstart möglich.)

Weiterhin gewinnt man aus dem von der Sekundärwicklung $W_2$ des Transformstors Tr gelieferten Signalspannung $U_2$ eine zur Sekundärspannung $U_s$ proportionale Spannung und über den Regelspannungserzeuger RSE die Regelspannung $U_R$. Im Regelverstärker RV wird die Regelspannung $U_R$ mit einer Referenz verglichen. Die Differenz zwischen der vom Regelverstärker RV an den Pulsdauer-Modulatar PDM gelieferten Signalspannung und der Referenz wird durch die Regelausgangsspannung $U_A$, die vom Ausgang des Regelverstärkers RV geliefert wird, dem Pulsdauer-Modulator PDM mitgeteilt, der sie mit dem Signal $U_{Jp}$ des Strom-Spannungswandlers SSW vergleicht und den durch den Transistor T gegebenen Schalter öffnet, sobald $U_{Jp} \geqq U_A$ gilt. Auf diese Weise wird der Spitzenwert $J_{pmax}$ von $J_p$ solange korrigiert, bis die Differenz zwischen $U_R$ und der Referenzspannung verschwindet. Dies bedeutet, daß $U_R$ und damit $U_s$ konstant bleiben.

In Figur 2 sind, wie bereits oben erwähnt, die wichtigsten Signale der Schaltung gemäß Fig. 1 gezeichnet. Zum Wirkungsprinzip kann auf das genannte Buch "Schaltnetzteile" von Wüstehube hingewiesen werden. Aus diesem entnimmt man folgendes Verhalten: Bei Entlastung des selbstschwingenden Sperrwandlers muß die Frequenz steigen. Theoretisch strebt sie bei Leerlauf gegen unendlich. In der Praxis wird sie jedoch bei der Eigenfrequenz des Systems begrenzt. Sie berechnet sich aus der Parallelresonanz der Komponenten $L_p$ (= Primärinduktivität) und $C_s \parallel C_w$ (vgl. Fig. 1). Mit der Eigenfrequenz und der minimalen Pulsbreite, die im wesentlichen durch daß Verhalten des Schalttransistors T bestimmt wird, ist die minimal mögliche Leistungsabgabe festgelegt. Entlastet man weiter, so steigt die Sekundärspannung und dementsprechend auch die Primärspannung in der Sperrphase (= Spannung zwischen Emitter und Kollektor des Transistors T), bis der durch den Transistor T gegebene Schalter, der Transformator Tr oder ein anderer Teil der Schaltung Schaden nimmt.

Ein Versuch, diesem Nachteil der bekannten Sperrwandler-Schaltnetzteile zu begegnen, bestand bisher lediglich darin, eine sogenannte Grundlast, die nicht abgeschaltet werden durfte, bzw. eine verlustbehaftete Schutzschaltung in Serie zu dem zum Transistor T parallelliegenden Schutzkondensator $C_s$ zu schalten. Eine solche Lösung ist jedoch unwirtschaftlich, da auch im Nennbetrieb (= Betrieb bei Nennlast) Leistung verbraucht wird, die den Wirkungsgrad des Sperrwandlers nicht unerheblich verschlechtert.

Der vorliegenden Erfindung liegt nun die Aufgabe zugrunde, ein der eingangs gegebenen Definition entsprechendes Sperrwandler-Schaltnetzteil so auszugestalten, daß die Sekundärspannung $U_s$ stabilisiert wird, indem man - abhängig von der Sekundärspannung $U_s$ - einen oder mehrere Impulsstarts aufgrund einer geeigneten Ausbildung des Sperrwandler-Schaltnetzteils spontan unterdrückt.

Zur Lösung dieser Aufgabe werden die Merkmale des kennzeichnenden Teiles des Anspruches 1 vorgeschlagen.

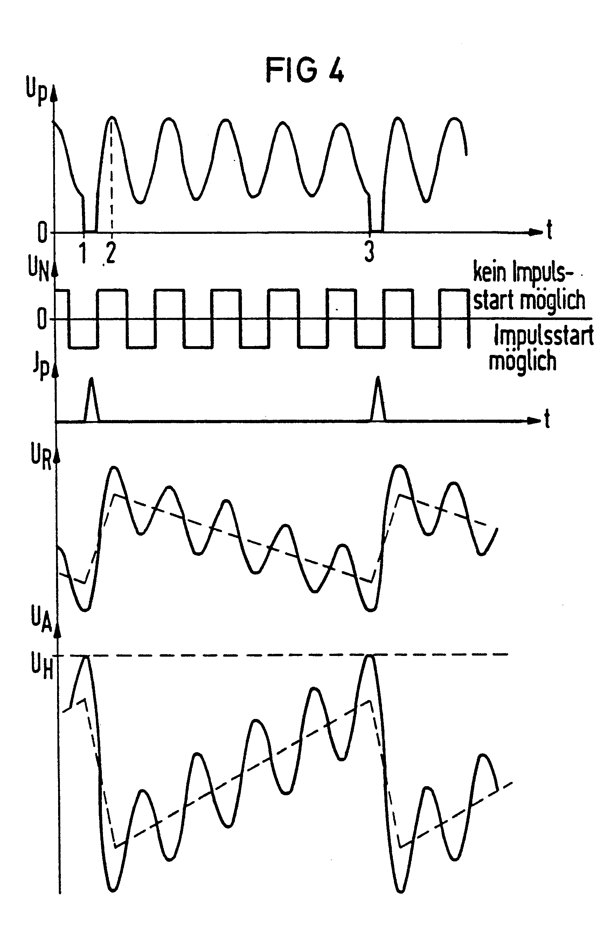

Figur 3 zeigt die im Sinne der Erfindung ergänzte Struktur eines freischwingenden Sperrwandler-Schaltnetzteils nach Figur 1 und Figur 4 das zugehörige Zeitdiagramm. In Figur 5 ist schließlich ein detailliertes Ausführungsbeispiel der Erfindung gezeigt.

Die in Figur 3 dargestellte Blockstruktur des der Erfindung entsprechenden Sperrwandler-Schaltnetzteils unterscheidet sich von der bekannten Struktur gemäß Figur 1 einmal dadurch, daß der Ausgang des Regelverstärkers RV zusätzlich zu dem in üblicher Weise ausgestalteten und von ihm unmittelbar durch das Signal $U_A$ gesteuerten Eingang des Pulsdauer-Modulators PDM zur Steuerung des nichtinvertierenden Eingangs eines als Komparator wirkenden Operationsverstärkers V vorgesehen ist. Dieser Komparator V wird an seinen invertierenden Eingang durch eine frei wählbare Hilfsspannung $U_H$ beaufschlagt und steuert mit seinem Ausgang einen weiteren Steuereingang des Pulsdauer-Modulators PDM, der im Sinne der obigen Definition ausgestaltet ist.

Als zweiter Unterschied ist die Anwesenheit des Koppelnetzwerks K zu vermerken, das von Ausgang der Impulsaufbereitungsanlage IAB beaufschlagt ist und das seinerseits - gemeinsam mit dem Regelspannungserzeuger RSV - den Regelverstärker RV steuert und damit eine Beeinflussung des vom Ausgang des Regelverstärkers RV gelieferten Steuersignals $U_A$ bewirkt.

Aufgrund der gemäß der Erfindung vorgesehenen Ergänzungen der bekannten Schaltung wird nun ab einer - durch die Hilfsspannung $U_H$ wählbaren - Sekundärspannung $U_s$ (die ja ansteigt) der Komparator V aktiviert, der dann den Pulsdauer-Modulator PDM so lange blockiert, solange die vom Ausgang des Regelverstärkers RV gelieferte Spannung $U_A$ kleiner als die genannten Hilfsspannung $U_H$ ist. Betrachtet man nun die in Fig. 4 zusammengestellten Zeitdiagramme für die Steuersignale ab Zeitpunkt Nr. 1 (vgl. das Diagramm für $U_p$), so erkennt man folgendes Verhalten: Zum Zeitpunkt 1 wird der durch den Transistor T gegebene elektronische Schalter geschlossen ($J_p$ steigt) und nach dem Erreichen der minimalen Pulsbreite, die sich wegen des konstanten Tastverhältnisses durch die Eigenfrequenz des Systems ergibt, wieder geöffnet. Dadurch steigt die Sekundärspannung $U_s$ und dementsprechend auch die am Eingang des Regelverstärkers RV liegende Regelspannung $U_R$, wie aus Fig. 4 ersichtlich, an. Die Schaltschwelle des Komparators V wird (siehe Zeitpunkt Nr. 2) unterschritten. Das das Signal $U_p$ liefernde System schwingt dann - nur durch die Regelwicklungslast und durch die Isolationswiderstände bedämpft - auf der Eigenfrequenz. Alle Startbefehle, die nun von der Impulsaufbereitungsanlage IAB herrühren ($U_N < 0$) bleiben unwirksam, solange $U_A < U_H$ gilt. Da die Regelspannung $U_R$ wie die Sekundärspannung $U_s$ bei ausbleibendem Ladezyklus der Primärseite $W_p$ des Transformators TR zusammenbricht, steigt das vom Regelverstärker RV an den Impulsdauer-Modulator PDM gelieferte Signal $U_A$ über die Zeit an (vgl. Fig. 4: Zeitraum 2 bis 3).

Das im Beispielsfall als Bandpaßfilter ausgebildete und auf die Eigenschwingung abgestimmte Koppelnetzwerk K filtert aus der Spannung $U_N$ (Rechteckspannung) die Grundwelle heraus und überlagert sie der Regelspannung $U_R$. Das Koppelnetzwerk K kann jedoch auch, wie bereits angedeutet, auch durch einen Vierpol gegeben sein, der z. B. als Tiefpaß- oder als Hochpaßfilter, ausgebildet ist. Im allgemeinen kommt es nur auf eine kapazitive Verbindung zwischen dem Ausgang von IAB und dem Eingang von RV an, so daß das Koppelnetzwerk K auch durch einen Kondensator (vgl. Fig. 5) gegeben sein kann. Man benötigt für den Betrieb eines der Erfindung entsprechenden Sperrwandler-Schaltnetzteils lediglich Grundwellenmaxima und Grundwellenminima.

Durch die Überlagerung erreicht man mittels des Komparators V, daß der neue Ladezyklus definiert immer im negativen Maximum der Eigenschwingung erfolgt (im Zeitpunkt Nr. 1 und Nr. 3 in Figur 4). Die Umladeverluste, die durch die zum Schalttransistor T parallel geschaltete Kapazität $C_s$ bedingt sind, bleiben somit (weil auch $U_p$ ein Minimum hat) minimal. Die Schaltung regelt die Sekundärspannung $U_s$ jetzt durch die Frequenzteilung der Eigenschwingung.

Eine vorteilhafte Ausgestaltung des in Fig. 3 dargestellten Sperrwandler-Schaltnetzteils wird nun anhand von Fig. 5 vorgestellt. Bei dieser ist der von der Sekundärwicklung $W_2$ beaufschlagte Regelspannungserzeuger RSE durch die Kombination einer Diode D1 mit zwei Widerständen R1 und R2 sowie einem Kondensator C1 gegeben. Dabei ist die Anode der Diode D1 unmittelbar mit der Sekundärwicklung $W_2$ des Transformators Tr und ihre Kathode einmal über den Kondensator C1 und das andere Mal über die Reihenschaltung der beiden Widerstände R1 und R2 mit dem Bezugspotential (Masse) verbunden. Die Regelspannung $U_R$ für den Regelverstärker RV wird am Teilerpunkt zwischen den beiden Widerständen R1 und R2 abgenommen. Somit besteht die Regelspannungserzeugung aus einer belasteten Einweggleichrichtung mit der Diode D1 als Gleichrichter, der während der Sperrphase (der Schalter T ist geöffnet) leitend ist, mit dem Kondensator C1 als Ladekondensator und mit den beiden Widerständen R1 und R2 als Lastwiderständen. Der Regelverstärker RV ist als Operationsverstärker realisiert, dessen nichtinvertierender Eingang an eine erste Referenzspannung $U_{ref1}$ und dessen invertierender Eingang über einen Widerstand R4 aan den Ausgang des Operationsverstärkers RV gelegt ist und außerdem über einen Widerstand R3 vom Ausgang des Regelspannungserzeugers beaufschlagt ist. Man könnte, wenn man die Diode D1 im Regelspannungserzeuger umpolt, den Verstärker RV auch als nichtinvertierenden Verstärker betreiben, wozu allerdings auch der Wickelsinn von $W_2$ umgekehrt werden müßte.

Der Kondensator C2, der einerseits vom Ausgang des Regelspannungserzeugers und andererseits vom Ausgang des Impulsaufbereiters IAB beaufschlart ist, liegt am invertierenden Eingang eines weiteren Operationsverstärkers V1, der bereits einen Eingang des Pulsdauer-Modulators PDM bildet. Der Kondensator C2 wirkt als Koppelnetzwerk K. Er differenziert die durch die Impulsaufbereitung IAB auf den Wert von $U_N$ begrenzte Spannung $U_2$ und überlagert diesen Spannungswert der Regelspannung $U_R$. Ist dabei $U_N < U_{ref3}$ ($U_{ref3}$ ist die zur Beaufschlagung des nichtinvertierenden Eingangs des zuletzt genannten Operationsverstärkers V1 dienende Referenzspannung), so gibt der als Komparator wirkende Operationsverstärker V1 den Eingang c des den Kern des Pulsdauer-Modulators PDM bildenden UND-Gatters G frei (c = high). Damit der Impulsstart erfolgen kann (= Ausgang d des UND-Gatters G hat den Pegel "high") muß die Gleichung

$$d = (U_{Jp} > U_A) \land (U_A > U_{ref2}) \land (U_{ref3} > U_N)$$

erfüllt sein. Hier erkennt man, daß der durch den Operetionsverstärker V3 gegebene Komparator (in Fg. 3 mit dem Berugszeichen "V" bezeichnet) den durch einen weiteren Operationsverstärker V2 gegebenen und vom Signal $U_{Jp}$ an seinem nichtinvertierenden Eingang gesteuerten Komparator blockieren kann, wenn die Regelspannung $U_R$ einen bestimmten Wert (der durch die Hilfsspannung $U_{ref2} = U_H$ entsprechend Fig. 3 definiert ist) überschreitet.

Der Strom-Spannungswandler SSW wird durch den über die Primärwicklung $W_p$ fließenden Strom beaufschlagt und kann als direkte Stromabfrage vermittels eines Widerstandes im Massezweig des Schalters T oder aber nach dem Prinzip der $J_p$-Nachbildung (wie sie in der Veröffentlichung von Siemens "Schaltnetzteile mit der IS TDA 4600" von E. Paulik und G. Peruth (erschienen 1981) auf S. 7, Spalte 1 beschrieben wird) arbeiten.

Über die Impulsaufbereitung IBR, die durch den Ausgang d des UND-Gatters G gesteuert ist, wird der elektronische Schalter T, der sowohl ein bipolarer Leistungstransistor als auch ein Power-MOS-Transistor oder ein Thyristor sein kann, angesteuert.

Zur Gewinnung der Sekundärspannung $U_s$ ist die in der durch die Sekundärwicklung $W_1$ des Transformators Tr betriebene Gleichrichterdiode D2 in der Gleichrichter Schaltung GL derart ausgestaltet, daß sie in der Sperrphase (d. h. wenn der Schalter T geöffnet ist) leitet. Die Kapazität C3 dient als Ladekondensator bezüglich der Erzeugung von $U_s$.

Hinsichtlich der Beschreibung der Wirkung des durch den Kondensator C2 gegebenen Koppelnetzwerks ist ergänzend noch folgendes festzustellen: Entsprechend den obigen Ausführungen differenziert dieser Kondensator C2 die durch die Impulsaufbereitung IAB auf den Wert $U_N$ begrenzte Spannung $U_2$ und überlagert sie der Regelspannung $U_R$, wobei $|X_{C2}| > R2$ (bei der Eigenfrequenz des Systems) gilt. Der Kondensator C2 dreht also die Phase von $U_N$ um angenähert 90°. Diese Phasendrehung wird durch das Tiefpaßverhalten des Regelverstärkers RV kompensiert, so daß die Einschaltbedingung "T schließen, wenn $U_p$ ein Minimum hat", gültig bleibt. Der Vorteil dieser in Fig. 5 dargestellten Ausgestaltung des Koppelnetzwerks K durch einen Kondensator C2 besteht darin, daß es im Nennbetrieb (d. h. Betrieb bei niedriger Frequenz, wodurch $X_{c2}$ größere Werte annimmt) kaum einen Regelfehler verursachen kann. Typische Werte für C2 liegen bei 20 - 100 pF, falls R2 auf etwa 1 kOhm bemessen ist.

## Patentansprüche

1. Sperrwandler-Schaltnetzteil zur Versorgung eines elektrischen Gerätes, bei dem die Primärwicklung ($W_p$) eines Transformators (Tr) in Serie mit der den Primärstrom ($I_p$) führenden Strecke eines Schalttransistors (T) an die durch Gleichrichtung der Netzwechselspannung erhaltene Gleichspannung gelegt und eine Sekundärwicklung ($W_1$) des Transformators (Tr) zur Stromversorgung des elektrischen Gerätes vorgesehen ist, die Steuerelektrode des Schalttransistors (T) durch den Ausgang einer Regelschaltung (RS) gesteuert ist und bei dem die Stromversorgung der Regelschaltung (RS) durch eine weitere Sekundärwicklung ($W_2$) des Transformators (Tr) erfolgt und die Regelschaltung (RS),
einen der Regelspannungserzeugung dienenden Schaltungsteil (RSE) mit einem nachgeschalteten Regelverstärker (RV), einen der Impulsaufbereitung dienenden Schaltungsteil (IAB), einen Strom-Spannungswandler (SSW), der als Istwert-Geber eine dem Primärstrom ($I_p$) proportionale Spannung ($U_{Ip}$) liefert, sowie
einen mit einem ersten Eingang an den Regelverstärker-Ausgang, mit einem zweiten Eingang an den Ausgang des Impulsaufbereitungs-Schaltungsteils (IAB), mit einem dritten Eingang an den Ausgang des Strom-Spannungswandlers (SSW) und mit einem Ausgang an die Steuerelektrode des Schalttransistors (T) angekoppelten Pulsdauer-Modulator (PDM), enthält,
dadurch gekennzeichnet, daß der zur Beaufschlagung des Pulsdauer-Modulators (PDM) dienende Ausgang des der Impulsaufbereitung dienenden Schaltungsteils (IAB) mit dem Regelspannungserzeugerausgang zur Beaufschlagung des Regelverstärkers (RV) über ein Koppelnetzwerk (K; C2) miteinander verbunden werden und daß der Ausgang dieses Regelverstärkers (RV) neben der Verbindung zu dem ihm zugeordneten Eingang des Pulsdauer-Modulators (PDM) eine Verbindung zum nichtinvertierenden Eingang eines Operationsverstärkers (V, V3) aufweist, dessen invertierender Eingang durch ein festes Hilfspotential ($U_H$, $U_{ref2}$) beaufschlagt ist und dessen Ausgang mit einem weiteren Steuereingang des Pulsdauer-Modulators (PDM) verbunden ist, daß die Ausgestaltung dieses weiteren Steuereingangs am Pulsdauer-Modulator (PDM) derart ist, daß durch den Wert des Hilfspotentials ($U_H$, $U_{ref2}$) eine Ansprechschwelle für das Ansprechen des Pulsdauer-Modulators (PDM) auf das ihm unmittelbar vom Ausgang des Regelverstärkers (RV) gelieferte Signal ($U_A$) definiert ist, daß durch das Koppelnetzwerk (K; bzw. C2) mit dem Regelverstärker (RV) und dem durch den Ausgang dieses Regelverstärkers (RV) am nichtinvertierenden Eingang gesteuerten und als Komparator wirksamen Operationsverstärker (V; V3) erreicht ist, daß der dreipolige elektronische Schalter (T) nur im negativen Maximum der von der Primärwicklung ($W_p$) gelieferten Primärspannung ($U_p$) einschaltbar ist, wenn eine vollständige Entlastung der Sekundärseite ($W_1$) des Transformators (Tr) vorliegt.

2. Vorrichtung nach Anspruch 1, dadurch gekennzeichnet, daß der elektronische Schalter (T) durch einen Bipolartransistor, insbesondere vom npn-Typ, gegeben ist, dessen Emitter am Bezugspotential, dessen Kollektor über die Primärwicklung des Transformators (Tr) an das durch Gleichrichtung der Versorgungsspannung erhaltene Versorgungspotential ($+V_s$) gelegt und dessen Emitter-Kollektorstrecke von einem Kondensator ($C_s$) überbrückt ist, während seine Basis vom Ausgang des Pulsdauer-Modulators (PDM) gesteuert ist.

3. Vorrichtung nach einem der Ansprüche 1 oder 2, dadurch gekennzeichnet, daß der an seinem nichtinvertierenden Eingang durch eine erste Referenzspannung ($U_{ref1}$) beaufschlagte und durch einen ersten Operationsverstärker (RV) gegebene Regelverstärker an seinem durch den Ausgang des Regelspannungserzeugers und des - z. B. durch einen Kondensator (C2) realisierten - Koppelnetzwerks (K) beaufschlagten invertierenden Eingang über einen Widerstand (R4) mit seinem eigenen Ausgang verbunden ist und daß dieser Ausgang des Regelverstärkers (RV) unmittelbar am invertierten Eingang eines - am anderen Eingang durch den als Istwertgeber wirksamen Strom-Spannungswandler beaufschlagten sowie einen Eingang des Pulsdauer-Modulators (PDM) bildenden - weiteren Operationsverstärkers (V2) gelegt und außerdem mit dem nichtinvertierenden Eingang des - am invertierenden Eingang durch die Hilfspannung ($U_{ref2} = U_H$) beaufschlagten - Operationsverstärkers (V3) verbunden ist, daß außerdem der - zugleich am Koppelnetzwerk (C2) liegende Ausgang der Impulsaufbereitungsanlage (IAB) an invertierenden Eingang eines weiteren und - in gleicher Weise wie die beiden vom Ausgang des Regelverstärkers (RV) beaufschlagten Operationsverstärker (V2, V3) - einen Eingang des Pulsdauer-Modulators bildenden Operationsverstärkers (V1) liegt und der andere Eingang durch eine weitere Referenzspannung ($U_{ref3}$) beaufschlagt ist, daß ferner die je einen der drei Eingänge des Pulsdauer-Modulators (PDM) bildenden Operationsverstärker (V2, V3, V1) je einen der Eingänge (a, b, c) eines UND-Gatters (G) gelegt sind, dessen Ausgang - unter Vermittlung einer weiteren Impulsaufbereitungsanlage (IBR) zur Beaufschlagung der Steuerelektrode des elektronischen Schalters (T) dient.

4. Vorrichtung nach einem der Ansprüche 1 bis 3, dadurch gekennzeichnet, daß der durch die eine Sekundärwicklung (W2) des Transformators (Tr) beaufschlagte Eingang des Regelspannungserzeugers (RSE) durch den einen Anschluß einer Diode (D1) gegeben ist, deren anderer Anschluß einerseits über einen Kondensator (C1) und andererseits über die Reihenschaltung zweier Widerstände (R1, R2) mit dem Bezugspotential (Masse) verbunden ist und daß ein zwischen den beiden Widerständen (R1, R2) liegender Teilerpunkt die für die Beaufschlagung des Regelverstärkers (RV) erforderliche Spannung ($U_R$) liefert.

5. Vorrichtung nach Anspruch 4, dadurch gekennzeichnet, daß der den Ausgang des Regelspannungserzeugers (RSE) bildende Teilerpunkt zwischen den beiden Widerständen (R1, R2) unmittelbar mit dem dem Regelverstärker (RV) zugewandten Anschluß des Koppelnetzwerks bzw. des dieses bildenden Kondensators (C2) und außerdem über einen Widerstand (R3) mit dem durch den Regelspannungserzeuger zu beaufschlagenden Eingang des Regelverstärkers (RV) verbunden ist.

## Claims

1. Flyback converter switched-mode power supply for supplying an electric device, in which the primary vinding ($W_p$) of a transformer (Tr) is connected in series with the path of a switching transistor (T), which carries the primary current ($I_p$), to the direct voltage obtained by rectifying the system alternating voltage and a secondary vinding ($W_1$) of the transformer (Tr) is provided for supplying the electric device with power, the control electrode of the switching transistor (T) is controlled by the output of a regulating circuit (RS) and in which the regulating circuit (RS) is supplied with power for a further secondary winding ($W_2$) of the transformer (Tr) and the regulating circuit (RS),

contains a circuit section (RSE) which is used for generating the regulating voltage, with a subsequent regulating amplifier (RV), a circuit section (IAB) which is used for pulse processing, a current/voltage converter (SSW) which, as setpoint transmitter, supplies a voltage ($U_{Ip}$) which is proportional to the primary current ($I_p$), and a pulse duration modulator (PDM) which is connected with a first input to the regulating amplifier output, with a second input to the output of the pulse processing circuit section (IAB), with a third input to the output of the current/voltage converter (SSW) and with an output to the control electrode of the switching transistor (T),

characterized in that the output of the circuit section (IAB) used for pulse processing, which is used for driving the pulse duration modulator (PDM), and the regulating voltage generator output are connected with one another via a coupling network (K; C2) for driving the regulating amplifier (RV), and that the output of this regulating amplifier (RV), in addition to the connection to the input of the pulse duration modulator (PDM) associated with it, exhibits a connection to the non-inverting input of an operational amplifier (V, V3), the inverting input of which is driven by a fixed auxiliary potential ($U_H$, $U_{ref2}$) and the output of which is connected to a further control input of the pulse duration modulator (PDM), that this further control input at the pulse duration modulator (PDM) is constructed in such a manner that the value of the auxiliary potential ($U_H$, $U_{ref2}$) defines a response threshold for the response of the pulse duration modulator (PDM) to the signal ($U_A$) supplied to it directly from the output of the regulating amplifier (RV), that the coupling network (K; or C2, respectively) with the regulating amplifier (RV) and the operational amplifier (V; V3) controlled by the output of this regulating amplifier (RV) at the non-inverting input and acting as comparator achieve the result that the three-pole electronic switch (T) can only be switched on at the negative peak of the primary voltage ($U_p$) supplied by the primary winding ($W_p$) if the secondary side ($W_1$) of the transformer (Tr) is completely unloaded.

2. Device according to Claim 1, characterized in that the electronic switch (T) is given by a bipolar transistor, particularly of the npn type, the emitter of which is connected to the reference potential, the collector of which is connected via the primary winding of the transformer (Tr) to the supply potential ($+V_s$) obtained by rectification of the supply voltage and the emitter-collector path of which is bypassed by a capacitor ($C_s$), whilst its base is controlled by the output of the pulse duration modulator (PDM).

3. Device according to one of Claims 1 or 2, characterized in that the regulating amplifier, which is driven by a first reference voltage ($U_{ref1}$) at its non-inverting input and is given by a first operational amplifier (RV), is connected at its inverting input, which is driven by the output of the regulating voltage generator and the coupling network (K), implemented, for example, by means of a capacitor (C2), to its own output via a resistor (R4) and that this output of the regulating amplifier (RV) is directly connected to the inverted input of a further operational amplifier (V2) which is driven by the current/voltage converter, which acts, as setpoint transmitter, at the other input and forms one input of the pulse duration modulator (PDM) and is also connected to the non-inverting input of the operational amplifier (V3), which is driven by the auxiliary voltage ($U_{ref2} = U_H$) at the inverting input, that, in addition, the output, which, at the same time, is connected to the coupling network (C2), of the pulse processing system (IAB) is connected to the inverting input of a further operational amplifier (V1), which forms an input of the pulse duration modulator in the same manner as the two operational amplifiers (V2, V3) driven by the output of the regulating amplifier (RV), and the other input is driven by a further reference voltage ($U_{ref3}$), that, furthermore, the operational amplifiers (V2, V3, V1), in each case forcing one of the three inputs of the pulse duration modulator (PDM), are in each case applied to one of the inputs (a, b, c) of an AND gate (G), the output of which is used for driving the control electrode of the electronic switch (T), with the interaction of a further pulse processing system (IBR).

4. Device according to one of Claims 1 to 3, characterized in that the input of the regulating voltage generator (RSE), which is driven by one secondary winding (W2) of the transformer (Tr), is given by one terminal of a diode (D1), the other terminal of which is connected, on the one hand, via a capacitor (C1) and, on the other hand, via the series circuit of two resistors (R1, R2) to the reference potential (earth) and that a divider point located between the two resistors (R1, R2) supplies the voltage ($U_R$) required for driving the regulating amplifier (RV).

5. Device according to Claim 4, characterized in that the divider point between the two resistors (R1, R2), which forms the output of the regulating voltage generator (RSE), is directly connected to the terminal of the coupling net-work, or of the capacitor (C2) forming the latter, which faces the regulating amplifier (RV) and, in addition, via a resistor (R3) to the input of the regulating amplifier (RV) which is to be driven by the regulating voltage generator.

## Revendications

1. Dispositif d'alimentation secteur à découpage, du type à convertiseur à récupération, pour l'alimentation d'un appareil électrique, dans lequel l'enroulement primaire ($W_p$) d'un transformateur (Tr) est connecté, en série avec le parcours d'un transistor de commutation (T) traversé par le courant primaire ($I_p$), à la tension continue obtenue par redressement de la tension alternative du secteur, dans lequel un enroulement secondaire ($W_1$) du transformateur (Tr) est prévu pour l'alimentation en courant de l'appareil électrique et l'électrode de commande du transistor de commutation (T) est commandée par la sortie d'un circuit de régulation (RS), et dans lequel l'alimentation en courant du circuit de régulation (RS) est assurée par un autre enroulement secondaire ($W_2$) du transformateur (Tr) et le circuit de régulation (RS) contient,

une partie de circuit (RSE) servant à la génération de la tension de réglage, avec un amplificateur de réglage (RV) monté à la suite,

une partie de circuit (IAB) servant à la préparation des impulsions,

un convertisseur courant-tension (SSW) qui, en tant que générateur de valeur réelle, fournit une tension ($U_{Ip}$) proportionnelle au courant primaire ($I_p$), ainsi que

un modulateur d'impulsions en durée (PDM) couplé par une première entrée à la sortie de l'amplificateur de réglage, par une seconde entrée à la sortie du circuit (IAB) pour la préparation des impulsions, par une troisième entrée à la sortie du convertisseur courant-tension (SSW) et par une sortie à l'électrode de commande du transistor de commutation (T),

caractérisé en ce que la sortie de la partie de circuit (IAB) pour la préparation des impulsions de sortie, sortie qui sert à agir sur le modulateur d'impulsions en durée (PDM), est connectée à travers un réseau de couplage (K; C2) à la sortie du générateur de tension de réglage destinée à agir sur l'amplificateur de réglage (RV), que la sortie de cet amplificateur de réglage (RV) présente, en plus de la liaison avec l'entrée qui lui est coordonnée du modulateur d'impulsions en durée (PDM), une liaison avec l'entrée non inverseuse d'un amplificateur opérationnel (V, V3) dont l'entrée inverseuse est alimentée par un potentiel auxiliaire fixe ($U_H$, $U_{ref2}$) et dont la sortie est reliée à une autre entrée de commande du modulateur d'impulsions en durée (PDM), que cette autre entrée de commande du modulateur d'impulsions en durée (PDM) est réalisée de manière que la valeur du potentiel auxiliaire ($U_H$, $U_{ref2}$) définit un seuil de réponse pour la réaction du modulateur d'impulsions en durée (PDM) au signal ($U_A$) qui lui est fourni directement par la sortie de l'amplificateur de réglage (RV), et que le réseau de couplage (K; ou C2) avec l'amplificateur de réglage (RV) et l'amplificateur opérationnel (V; V3), agissant comme comparateur et commandé à l'entrée non inverseuse par la sortie de cet amplificateur de réglage (RV), font que l'interrupteur électronique tripolaire (T) peut seulement être enclenché au maximum négatif de la tension primaire ($U_p$) fournie par l'enroulement primaire ($W_p$) en présence d'une décharge complète du côté secondaire ($W_1$) du transformateur (Tr).

2. Dispositif selon la revendication 1, caractérisé en ce que l'interrupteur électronique (T) est formé par un transistor bipolaire, en particulier de type npn, dont l'émetteur est relié au potentiel de référence, dont le collecteur est relié à travers l'enroulement primaire du transformateur (Tr) au potentiel d'alimentation ($+V_s$) obtenu par redressement de la tension d'alimentation et dont le parcours émetteur-collecteur est shunté par un condensateur ($C_s$), tandis que sa base est commandée par la sortie du modulateur d'impulsions en durée (PDM).

3. Dispositif selon la revendication 1 ou 2, caractérisé en ce que l'amplificateur de réglage, formé par un premier amplificateur opérationnel (RV) et alimenté à son entrée non inverseuse par une première tension de référence ($U_{ref1}$), est relié par son entrée inverseuse à sa propre sortie à travers une résistance (R4), l'entrée inverseuse étant alimentée par la sortie du générateur de tension de réglage et par le réseau de couplage (K) - constitué par exemple par un condensateur (C2) -, que cette sortie de l'amplificateur de réglage (RV) est connectée directement à l'entrée inverseuse d'un autre amplificateur (V2), l'autre entrée de cet amplificateur étant attaquée par le convertisseur courant-tension agissant comme générateur de valeur réelle et constituant une entrée du modulateur d'impulsions en durée (PDM), et est connectée, en plus, à l'entrée non inverseuse de l'amplificateur opérationnel (V3) dont l'entrée inverseuse est alimentée par la tension auxiliaire ($U_{ref2} = U_H$), que, en outre, la sortie du dispositif de préparation des impulsions (IAB) - reliée en même temps au réseau de couplage (C2) - est connectée à l'entrée inverseuse d'un amplificateur opérationnel (V1) supplémentaire, formant une entrée du modulateur d'impulsions en durée et alimenté de la même façon que les deux amplificateurs opérationnels (V2 et V3) alimentés par la sortie de l'amplificateur de réglage (RV), l'autre entrée de cet amplificateur opérationnel supplémentaire étant alimentée par une autre tension de référence ($U_{ref3}$), et que, en plus, les amplificateurs opérationnels (V2, V3, V1), constituant chacun l'une des trois entrées du modulateur d'impulsions en durée (PDM), sont chacun connectés à l'une des entrées (a, b, c) d'une porte ET (G) dont la sortie sert - par l'intermédiaire d'un dispositif supplémentaire de préparation des impulsions (IBR) - à attaquer l'électrode de commande de l'interrupteur électronique (T).

4. Dispositif selon une des revendications 1 à 3, caractérisé en ce que l'entrée du générateur de tension de réglage (RSE), entrée qui est alimentée par l'un (W2) des enroulements secondaires du transformateurs (Tr), est formée par une borne d'une diode (D1) dont l'autre borne est reliée d'une part à travers un condensateur (C1) et d'autre part à travers le montage série de deux résistances (R1, R2) au potentiel de référence (masse) et qu'un point de division situé entre les deux résistances (R1, R2) fournit la tension ($U_R$) nécessaire à l'alimentation de l'amplificateur de réglage (RV).

5. Dispositif selon la revendication 4, caractérisé en ce que le point de division situé entre les deux résistances (R1, R2) et formant la sortie du générateur de tension de réglage (RSE), est relié directement à la borne dirigée vers l'amplificateur de réglage (RV) du réseau de couplage, ou du condensateur (C2) formant ce réseau et est relié, en outre, à travers une résistance (R3), à l'entrée de l'amplificateur de réglage (RV) à alimenter par le générateur de tension de réglage.

## FIG 1

## FIG 2

$U_N > 0$ heißt:
S bleibt offen

$U_N < 0$ heißt:
S wird geschlossen
(Impulsstart)

Sperrphase — Leitph.
S ist offen | S ist geschlossen

EP 0 124 734 B1

# FIG 3

# FIG 5

3

# FIG 4